Europäisches Patentamt

European Patent Office

Office européen des brevets

(11) Veröffentlichungsnummer: **0 078 895**

**A1**

(12) # EUROPÄISCHE PATENTANMELDUNG

(21) Anmeldenummer: **82107987.8**

(22) Anmeldetag: **31.08.82**

(51) Int. Cl.³: **H 04 N 5/64**

(30) Priorität: **05.11.81 DE 3143932**

(43) Veröffentlichungstag der Anmeldung:
**18.05.83 Patentblatt 83/20**

(84) Benannte Vertragsstaaten:
**AT CH DE FR GB IT LI**

(71) Anmelder: **GRUNDIG E.M.V. Elektro-Mechanische
Versuchsanstalt Max Grundig & Co. Kg.
Kurgartenstrasse 37
D-8510 Fürth/Bayern(DE)**

(72) Erfinder: **Klein, Walter, Ing. grad.
Haselhofstrasse 33
D-8520 Erlangen-Tennenlohe(DE)**

(72) Erfinder: **Mangold, Hans, Dipl.-Ing.
Bussardstrasse 18
D-8510 Fürth(DE)**

(54) **Fernsehgerät.**

(57) Das Fernsehgerät besteht aus mehreren Geräteteilen,
wobei ein Gerätebildteil (1), das einen besonders flachen
Bildschirm (3) aufweist, an mehrere Seiten eines Geräteempfangsteils (2) ansteckbar ist.

FIG.1

EP 0 078 895 A1

# FERNSEHGERÄT

## Beschreibung

Die Erfindung betrifft ein aus mehreren Geräteteilen zusammensetzbares Fernsehgerät.

Bei Fernsehgeräten ist die Gerätegröße vorwiegend von der Größe der Bildschirmfläche und der Tiefe der Bildröhre bestimmt. Die Größe der Bildschirmfläche ist bereits den unterschiedlichen Bedürfnissen des Betrachters eines Fernsehgeräts angepaßt. Nachteilig wird lediglich die Tiefe der Geräte angesehen, die jedoch durch die technisch bedingte Bildröhrentiefe bisher nicht wesentlich reduziert werden konnte. Neuerdings wird an der Entwicklung von sehr flachen Bildschirmen mit Erfolg gearbeitet. Diese flachen Bildschirme ermöglichen nun eine erhebliche Reduzierung der Gerätetiefe.

Es ist somit Aufgabe der Erfindung, den Nachteil der Bautiefe bei Fernsehgeräten durch Verwendung eines flachen Bildschirmes zu beseitigen und gleichzeitig ein Fernsehgerät mit einem sehr flachen Bildschirm für die Verwendung unter verschiedenen Betriebsbedingungen zu schaffen.

Diese Aufgabe wird gemäß der Erfindung durch die im Kennzeichen des Anspruchs 1 enthaltenen Maßnahmen gelöst. Bevorzugte Ausführungsbeispiele der Erfindung sind in den Unteransprüchen gekennzeichnet.

Durch die Erfindung wird überraschenderweise der Vorteil erzielt, daß ein Fernsehgerät, das ohne vorher der Benutzungsweise sicher zu sein, gekauft wird, durch wenige Handgriffe umrüstbar ist und sowohl als Standgerät oder als hängendes Wandgerät oder in getrennter Anordnung von Bildteil und Empfangsteil betreibbar ist. Weiterhin können beim Betreiben des erfindungsgemäßen Fernsehgeräts als Standgerät größere Lautsprecherboxen angebracht werden, wobei das Gerät auch dann noch erheblich flacher ist als Geräte bisheriger Ausführung.

Weitere Einzelheiten und Vorteile der Erfindung sind anhand der Zeichnung erläutert. Es zeigt:

Fig. 1    eine perspektivische Ansicht
          eines Fernsehgeräts mit den
          erfindungswesentlichen Merkmalen,

Fig. 2      eine perspektivische Ansicht
            ähnlich der Fig. 1, jedoch
            vor dem Anstecken eines Ge-
            rätebildteils an das Geräte-
            empfangsteil,

Fig. 3      eine perspektivische Ansicht
            eines Fernsehgeräts mit einem
            gegenüber der Fig. 1 umgesteckten Gerätebildteil,

Fig. 4      eine perspektivische Ansicht
            ähnlich der Fig. 1 mit zwei
            Lautsprecherboxen,

Fig. 5      eine perspektivische Ansicht
            ähnlich der Fig. 4, jedoch
            mit angeschwenkten Lautsprecherboxen,

Fig. 6      eine perspektivische Ansicht
            eines erfindungsgemäßen
            Fernsehgeräts mit einem vom
            Geräteempfangsteil getrennten
            Gerätebildteil,

Fig. 7    eine perspektivische Ansicht
ähnlich der Fig. 1, jedoch
ein auf einem Geräteempfangsteil verschwenkbar angestecktes Gerätebildteil,

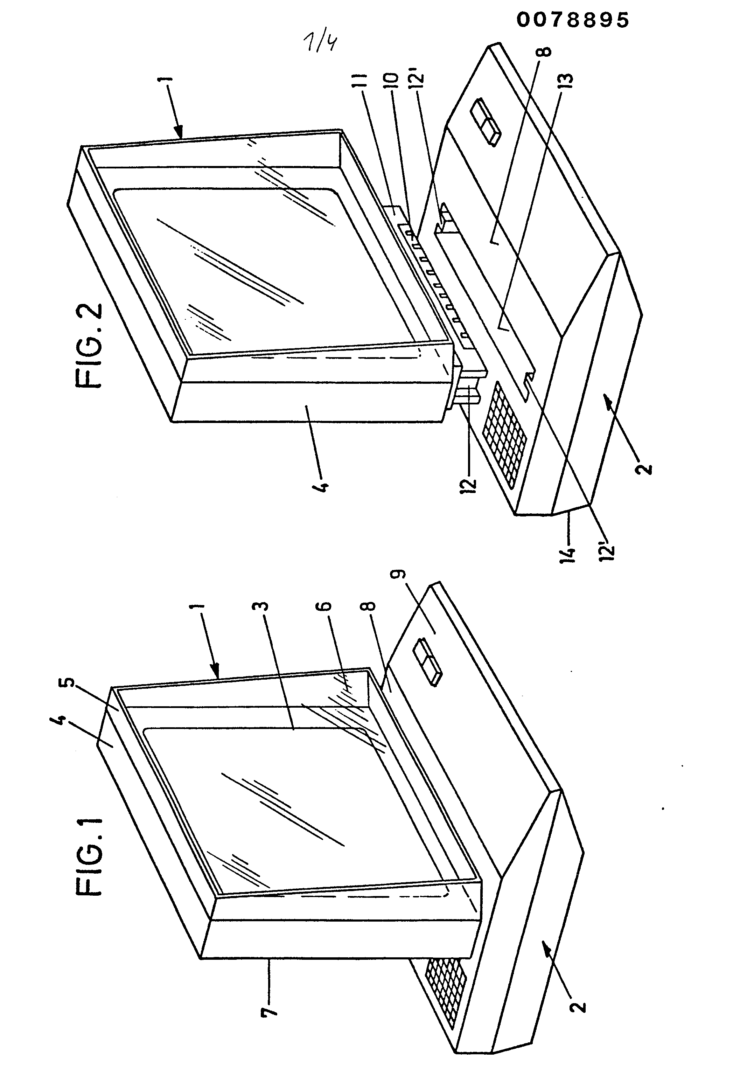

Aus der Fig. 1 ist ein Fernsehgerät ersichtlich, das im wesentlichen aus einem Gerätebildteil 1 und aus einem Geräteempfangsteil 2 besteht. Beide Geräteteile 1 und 2 haben eine rechteckige Grundform und sind von nahezu gleicher Breite und Höhe. Auf das flachliegende Geräteempfangsteil 2 ist das Gerätebildteil 1 senkrecht eingesteckt. Das Gerätebildteil enthält einen besonders flachen Bildschirm 3, der von einem schmalen Rahmen 4 umfaßt ist. Vor dem Bildschirm 3 und in Verlängerung des Rahmens 4 ist ein Blendrahmen 5 angeordnet. Bedarfsweise ist in den Blendrahmen eine optische Filterscheibe 6 mit entsprechender Farbtönung eingesetzt. Die Rückseite des Gerätebildteils ist durch eine Rückwand 7 abgedeckt. Die Rückwand kann auch in vorteilhafter Ausgestaltung des schmalen Rahmens 4, der den flachen Bildschirm umfaßt, mit diesem einstückig verbunden sein. Das Geräteempfangsteil 2 weist eine zur Horizontalen der Deckfläche 8 leicht geneigtes Bedienfeld 9 auf. Da Fernsehgeräte inzwischen vorzugsweise fernbedienbar sind, ist das Bedienfeld nur mit wenigen Tasten bestückt.

Die Fig. 2 zeigt das Gerätebildteil 1 kurz vor dem Anstecken an das Geräteempfangsteil 2. Das Gerätebildteil 1 weist stirnseitig an der Breitseite eine schmale Steckleiste 10 mit einer Vielzahl von elektrischen Kontakten auf. Die Steckleiste ist an einem Sockel 11 des Gerätebildteils 1 angebracht. Der Sockel 11 ist einstückig mit dem schmalen Rahmen 4 des Gerätebildteils 1 verbunden. Weiterhin weist der Sockel 11 Führungselemente 12 auf, die beim Zusammenstecken beider Teile (Bildteil 1 und Empfangsteil 2) in Führungselemente des Empfangsteils 2 greifen und die elektrische Steckverbindung mechanisch entlasten. Die Deckfläche 8 des Empfangsteils 2 weist eine Öffnung 13 auf, in die die Steckleiste 10 des Gerätebildteils 1 hineinragt und sich mit einem Gegenstück im Geräteempfangsteil elektrisch kontaktierend verbindet. Ferner befinden sich Führungselemente 12 in der Öffnung des Empfangsteils 2. Weiterhin kann die mechanische Verbindung beider Geräteteile durch eine nicht näher dargestellte lösbare Rastverbindung gesichert sein. Die gleiche Öffnung, die an der Deckfläche angeordnet ist, befindet sich auch mit Führungselement und Gegenstück zur Kontaktleiste 10 an der schmalen Rückseite 14 des Empfangsteils 2.

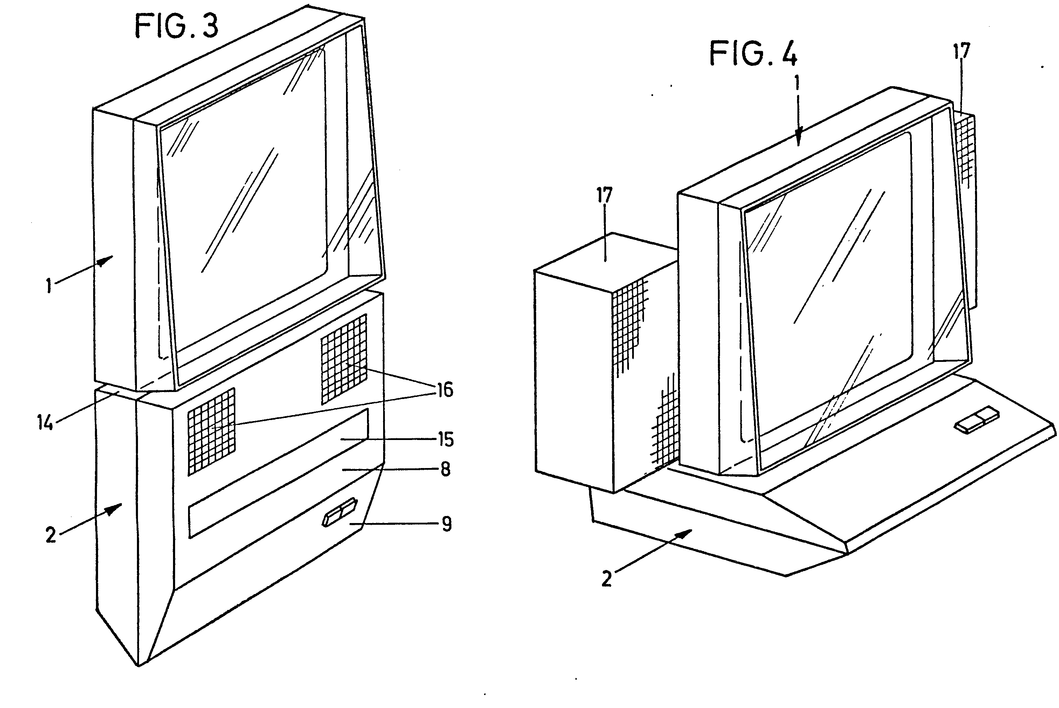

Aus Fig. 3 ist das Fernsehgerät im gegenüber der Fig. 1 umgesteckten Zustand ersichtlich. Das Gerätebildteil 1 ist an die schmale Rückseite 14 des Geräteempfangsteils 2 in flachliegender Form angesteckt. Bei Verbindung beider Teile in dieser Lage kann das Fernsehgerät wie ein Bild an einer beliebigen senkrechten Wand aufgehängt werden. Hierzu sind an der Boden- bzw. Rückseite, vorzugsweise am Geräteempfangsteil 2, Einrichtungen zum Befestigen bzw. Aufhängen des Geräts vorhanden. Die nicht benötigte Öffnung für die unbenutzte Steckverbindung in der Deckfläche 8 des Geräteempfangsteils 2 ist durch eine Abdeckung 15 verschlossen. Im rückwärtigen Teil der Deckfläche 8 des Geräteempfangsteils 2 befinden sich vorzugsweise auf beiden Seiten eingebaute Lautsprecher, die durch ein Gitter 16 abgedeckt sind. Die Lautsprecher können jedoch auch in getrennten flachen Boxen untergebracht sein und z.B. mit Abstand zum Fernsehgerät und in gleicher Höhe an die Wand gehängt werden.

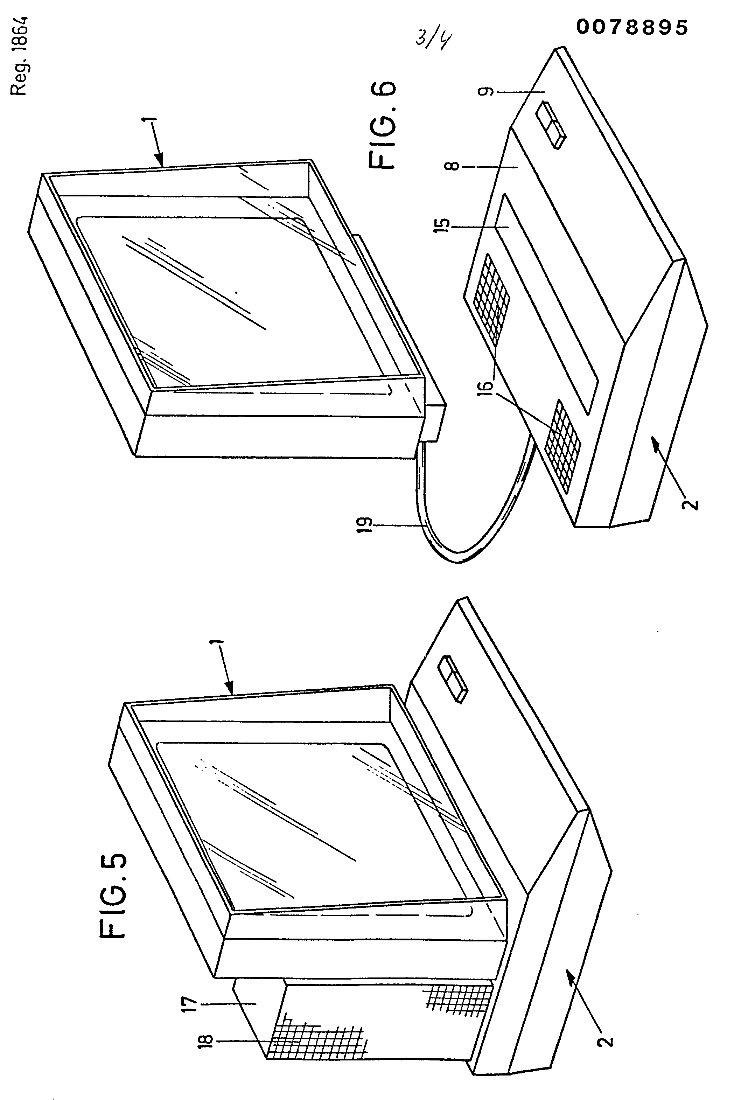

Eine andere Möglichkeit der Zuordnung der Lautsprecherboxen zum Fernsehgerät ist aus Fig. 4 ersichtlich. Hierbei sind vorzugsweise zwei Lautsprecherboxen 17 auf dem Geräteempfangsteil 2 und hinter dem Gerätebildteil 1 schwenkbar aufgesetzt. Die Lautsprecherboxen 17 können somit auch zurückgeschwenkt werden, wie in Fig. 5 gezeigt ist. In beiden Lagen sind die Lautsprecherboxen 17 funktionsfähig. Bei eingeschwenkten Lautsprecherboxen schließt die Schall-Öffnungsseite 18 der Boxen mit der Seitenwand des Gerätebildteils 1 bündig ab.

In Fig. 6 ist eine getrennte Anordnung der beiden Geräteteile 1 und 2 dargestellt, wobei die elektrische Verbindung über ein flexibles Kabel 19 erfolgt. Das Kabel 19 weist an beiden Enden entsprechende Verbindungssteckleisten 10 auf und kann somit ohne jegliche Änderung an die Geräteteile 1 und 2 angesteckt werden. Die nicht benutzte Öffnung für die Steckverbindung wird im Geräteempfangsteil 2 durch die Abdeckung 15 geschlossen. Das Gerätebildteil kann für sich ohne Empfangsteil an einer beliebigen Wand aufgehängt werden.

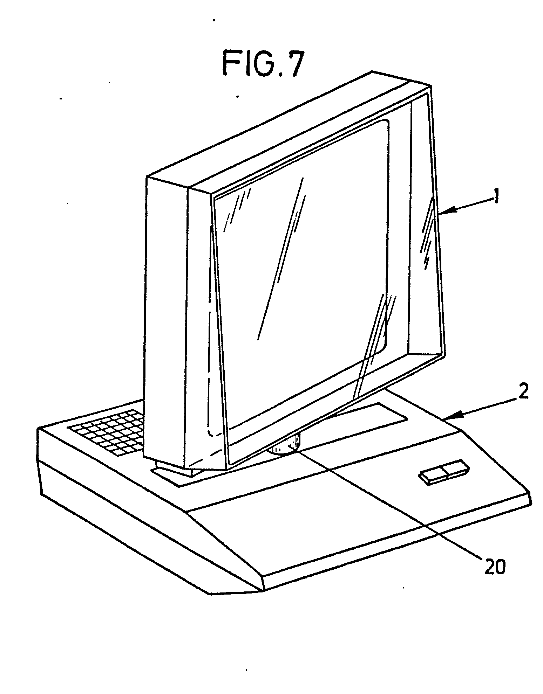

Wie aus der Fig. 7 ersichtlich, ermöglicht eine zentrale Verbindung zur Steckleiste des Gerätebildteils 1 in Form einer Zwischensteckeinrichtung 20 ein schwenkbares Anstecken des Gerätebildteils 1 auf das Geräteempfangsteil 2.

# F E R N S E H G E R Ä T

Patentansprüche

1. Aus mehreren Geräteteilen zusammensetzbares Fernsehgerät, d a d u r c h   g e k e n n z e i c h - n e t , daß ein Gerätebildteil (1), das einen besonders flachen Bildschirm (3) enthält, wahlweise an mehrere Seiten eines Geräteempfangsteils (2) ansteckbar ist, und daß beim Anstecken eine Kontaktverbindung zwischen der im Gerätebildteil und Geräteempfangsteil enthaltenen Schaltung im Sinne der erforderlichen Signalübertragung vom Geräteempfangsteil auf den Gerätebildteil hergestellt wird.

2. Fernsehgerät nach Anspruch 1, d a d u r c h g e k e n n z e i c h n e t , daß das Gerätebildteil (1) und das Geräteempfangsteil (2) eine flache rechteckige Gehäuseform aufweisen, die im Sinne der Umsteckbarkeit möglichst von gleicher Breite und Höhe ist.

3. Fernsehgerät nach den Ansprüchen 1 und 2, dadurch gekennzeichnet , daß das Gerätebildteil (1) vorzugsweise auf das flachliegende Empfangsteil (2) senkrecht oder flachliegend an die schmale Rückseite (14) des Geräteempfangsteils (2) ansteckbar ist.

4. Fernsehgerät nach den Ansprüchen 1 bis 3, dadurch gekennzeichnet , daß beim Anstecken des Gerätebildteils (1) an das Geräteempfangsteil (2) eine elektrische Steckverbindung und eine mechanische Steck- und/oder Rastverbindung hergestellt wird.

5. Fernsehgerät nach den Ansprüchen 1 bis 4, dadurch gekennzeichnet , daß das Gerätebildteil (1) ohne mechanische Verbindung über ein flexibles Kabel (19) an das Geräteempfangsteil (2) ansteckbar ist.

6. Fernsehgerät nach den Ansprüchen 1 bis 5, dadurch gekennzeichnet , daß am Gerätebildteil (1) und Geräteempfangsteil (2) wechselweise ineinandergreifende Führungselemente (12) derart vorgesehen sind, daß beim Zusammenstecken beider Teile die elektrische Steckverbindung mechanisch entlastet ist.

- 3 - 0078895

7. Fernsehgerät nach den Ansprüchen 1 bis 6, d a d u r c h g e k e n n z e i c h n e t , daß die elektrische Steckverbindung zwischen Gerätebildteil und Geräteempfangsteil als schmale Steckleiste (10) ausgebildet ist.

8. Fernsehgerät nach den Ansprüchen 1 bis 7, d a d u r c h g e k e n n z e i c h n e t , daß das Gerätebildteil (1) aus einem schmalen, den flachen Bildschirm umfassenden Rahmen (4) und einer Rückwand (7) besteht.

9. Fernsehgerät nach den Ansprüchen 1 bis 8, d a d u r c h g e k e n n z e i c h n e t , daß das Gerätebildteil (1) einen dem Bildschirm vorgesetzten Blendrahmen (5) aufweist.

10. Fernsehgerät nach den Ansprüchen 1 bis 9, d a d u r c h g e k e n n z e i c h n e t , daß frontseitig in den Blendrahmen (5) eine optische Filterscheibe (6) eingesetzt ist.

11. Fernsehgerät nach den Ansprüchen 1 bis 10, d a d u r c h g e k e n n z e i c h n e t , daß sich im Gerätebildteil zwischen der Rückseite des Bildschirmes und der Rückwand elektrische Schaltelemente und/oder eine mit elektrischen Bauteilen bestückte gedruckte Schaltungsplatte befindet.

12. Fernsehgerät nach den Ansprüchen 1 bis 11, d a d u r c h   g e k e n n z e i c h n e t , daß das Geräteempfangsteil (2) eine zur Horizontalen der Deckfläche (8) leicht geneigtes Bedienfeld (9) aufweist.

13. Fernsehgerät nach den Ansprüchen 1 bis 12, d a d u r c h   g e k e n n z e i c h n e t , daß ein oder mehrere Lautsprecher in eine Lautsprecherbox (17) eingesetzt sind, und wenigstens ein oder vorzugsweise zwei Lautsprecherboxen auf das Geräteempfangsteil (2) schwenkbar aufgesetzt sind.

14. Fernsehgerät nach den Ansprüchen 1 bis 13, d a d u r c h   g e k e n n z e i c h n e t , daß die Lautsprecherboxen (17) hinter dem Gerätebildteil (1) auf der Deckfläche des Geräteempfangsteils (2) angeordnet sind.

15. Fernsehgerät nach den Ansprüchen 1 bis 14, d a d u r c h   g e k e n n z e i c h n e t , daß die Schall-Öffnungsseite (18) der Lautsprecherbox (17) im eingeschwenkten Zustand mit der Seitenwand des Gerätebildteils (1) und des Geräteempfangsteils (2) bündig abschließt.

16. Fernsehgerät nach den Ansprüchen 1 bis 15, d a d u r c h   g e k e n n z e i c h n e t , daß

die Geräteanschlüsse in der schmalen Rückseite und/oder im Boden des Empfangsteils angebracht sind.

17. Fernsehgerät nach den Ansprüchen 1 bis 16, d a d u r c h g e k e n n z e i c h n e t , daß die Öffnung für die Steckleiste (10) im Geräteempfangsteil (2) durch eine aufsteckbare oder selbstschließende Abdeckung (15) verschließbar ist.

18. Fernsehgerät nach den Ansprüchen 1 bis 17, d a d u r c h g e k e n n z e i c h n e t , daß das Gerätebildteil (1) schwenkbar an das Geräteempfangsteil (2) ansteckbar ist.

19. Fernsehgerät nach den Ansprüchen 1 bis 18, d a d u r c h g e k e n n z e i c h n e t , daß das Gerätebildteil (1) an seiner Rückseite und/oder das Geräteempfangsteil (2) an seiner Bodenseite Einrichtungen zum Befestigen an einer senkrechten Fläche aufweist.

Reg. 1864

FIG.1

FIG.2

0078895

FIG. 3

FIG. 4

0078895

FIG.5

18 17

1

2

19

FIG.6

1

16 15 8

9

2

0078895

# FIG.7

Europäisches
Patentamt

**0078895**
Nummer der Anmeldung

**EUROPÄISCHER RECHERCHENBERICHT**

EP  82 10 7987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | AUDIO, Band 65, Nr.5, Mai 1981, PHILADELPHIA, Penn. (US) <br><br> L. FELDMAN: "The video screen in your future", Seiten 34,35 * Seite 34, Spalte 1 - Spalte 3, Zeile 4 * | 1,5,4, 6,7,16 ,17,9 | H 04 N    5/64 |
| Y | US-A-3 727 000  (JOHN S. LOLLOS) <br><br> * Zusammenfassung; Anspruch 1 * | 1,5,4, 6,7,16 ,17,9 | |
| Y | US-A-4 208 081  (DENNIS H. KEKAS et al.) <br> * Zusammenfassung; Figuren 2-4; Spalte 3, Zeile 48 - Spalte 4, Zeile 19 * | 4,6,7, 16,17 | RECHERCHIERTE SACHGEBIETE (Int. Cl. ³) |
| Y | US-A-3 733 436  (JOSEPH K. ROSE) <br> * Zusammenfassung; Figuren 1,2 * | 9 | H 04 N <br> G 06 F |
| A | DE-A-2 947 793  (PROF. DR. KLAUS HAEFNER) <br> * Ansprüche 1-2; Figur 1; Seite 2, Absatz 1 * | 1-4,11 | |
| A | US-A-3 418 426  (HERBERT SCHLEGEL et al.) <br> * Spalte 2, Zeilen 39-72 * <br><br> ---            -/- | 10 | |

Der vorliegende Recherchenbericht wurde für alle Patentansprüche erstellt.

| Recherchenort <br> DEN HAAG | Abschlußdatum der Recherche <br> 07-02-1983 | Prüfer <br> BECKER K.H. |
|---|---|---|

**Europäisches Patentamt**

# EUROPÄISCHER RECHERCHENBERICHT

EP 82 10 7987

## EINSCHLÄGIGE DOKUMENTE

Seite 2

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| A | DE-A-2 806 580 (GORENJE KÖRTING ELECTRONIC GmbH) <br> * Figur 1; Anspruch 5 * | 13,15 | |
| A | DE-A-2 125 802 (VYZKUMNY USTAV MATEMATICKYCH STROJU) <br> * Figur 1 * | 12,18 | |

|  |
|---|
| RECHERCHIERTE SACHGEBIETE (Int. Cl. ³) |

Der vorliegende Recherchenbericht wurde für alle Patentansprüche erstellt.

| Recherchenort <br> DEN HAAG | Abschlußdatum der Recherche <br> 07-02-1983 | Prüfer <br> BECKER K.H. |
|---|---|---|